# EUROPEAN PATENT APPLICATION

(11) **EP 2 615 075 A1**
(43) Date of publication of application: **17.07.2013**
(21) Application number: 11823337.8
(22) Date of filing: 15.07.2011
(51) Int. Cl.: C04B 41/89, C01B 31/04, C04B 35/52, C04B 41/87, C04B 41/88, C04B 41/90, C23C 28/00

(54) **CARBON MATERIAL AND PROCESS FOR PRODUCING SAME**

(30) Priority: 06.09.2010 JP 2010199134
(71) Applicant: Toyo Tanso Co., Ltd., Osaka-shi Osaka 555-0011 (JP)
(72) Inventor: TAKEDA, Akiyoshi, Kanonji-shi Kagawa 769-1612 (JP); MATSUNAGA, Hiroaki, Kanonji-shi Kagawa 769-1612 (JP); SETANI, Kaoru, Kanonji-shi Kagawa 769-1612 (JP)
(74) Representative: Glawe, Delfs, Moll
(86) International application number: PCT/JP2011/066180
(87) International publication number: WO 2012/032858

(57) **Abstract**

A carbon material and a method of manufacturing the same are provided that make it possible to form a layer of a metal that is highly reactive with carbon, such as tungsten, on a carbon substrate while at the same time inhibiting an increase in manufacturing cost and a degradation of processing accuracy. The carbon material has a carbon substrate 2, a first layer 12, and a second layer 13. The first layer contains a carbide of a transition metal. The second layer contains a second metal and/or a carbide of the second metal and a carbide of the transition metal, the second metal being at least one metal selected from the group of metals consisting of Group 4 elements, Group 5 elements, and Group 6 elements. The first and second layers are formed on a surface of the carbon substrate in that order.

## Description

### TECHNICAL FIELD

The present invention relates to a surface-modified carbon material and a method of manufacturing the same.

### BACKGROUND ART

Carbon materials are light in weight and excellent in chemical and thermal stability, and moreover, they show good thermal conductivity and electrical conductivity even though they are non-metallic materials. However, they are inferior to metallic materials in terms of oxidation resistance and wear resistance.

In view of the problem, the following carbon materials and manufacturing methods for carbon materials have been proposed.
A carbon material made by forming, on a carbon substrate surface that has been treated with a blasting process, a thermal sprayed coating layer of at least one meal selected from the group of Cr, Ti, V, W, Mo, Zr, Nb, and Ta, or an alloy thereof, whose ratio of linear expansion coefficient to carbon is 0.73 to 1.44 and which has a large chemical affinity to carbon at its interface (see Patent Document 1 indicated below).
A method of manufacturing a carbon material, in which a surface of a carbon substrate is plasma-sprayed with a high-melting point metal or a carbide thereof and at the same time is irradiated with laser under reduced pressure to perform coating (see Patent Document 2 indicated below).

A carbon material in which a layer of fine-particulate reactive metallic chromium is vapor deposited on a surface of a carbon substrate by heat treating the carbon substrate in a chromium halide gas containing hydrogen gas (see Patent Document 3 indicated below).
A carbon material in which a layer of fine-particulate reactive metallic chromium is vapor deposited between a surface of a carbon substrate and a thermal sprayed layer by heat treating the carbon substrate in a chromium halide gas containing hydrogen gas (see Patent Document 4 indicated below).

### CITATION LIST

### Patent Literature

[Patent Document 1] Japanese Published Unexamined Patent Application No. H05(1993)-070268A
[Patent Document 2] Japanese Published Examined Patent Application No. H06(1994)-076265 B
[Patent Document 3] Japanese Published Unexamined Patent Application No. H08(1996)-143384 A
[Patent Document 4] Japanese Published Unexamined Patent Application No. H08(1996)-143385 A

### SUMMARY OF INVENTION

### TECHNICAL PROBLEM

However, a specialized apparatus is necessary for the method in which a coating layer of a metal or an alloy thereof is formed on the surface of the carbon substrate using thermal spraying or the like, or the method in which a similar coating layer is formed using plating, such as shown in Patent Documents 1 and 2 indicated above. This leads to an increase in the manufacturing cost of the carbon material. In addition, when thermal spraying is used, a thin film cannot be formed due to the manufacturing method (due to the fact that the film is formed by spraying particles), and moreover, the film cannot be formed along the shape of the carbon substrate. For example, when the film formation process is conducted for a carbon substrate in which small holes and grooves are formed, the holes or grooves may be filled up in some cases. Thus, there are problems that a material in a desired shape cannot be obtained and that processing accuracy degrades. Also, forming the small holes or grooves by a later process is undesirable because the formed film should be removed and the carbon substrate is exposed.

When a chromium layer is formed on a surface of a carbon substrate as shown in Patent Documents 3 and 4 indicated above, a chromium layer with good quality can be formed by using a method in which the carbon substrate is heat treated in a chromium halide gas containing hydrogen gas. However, if a similar method is used to form a layer of a metal having high reactivity with carbon, such as tungsten, on a carbon substrate surface, a layer of the metal cannot be formed because the carbide of the metal such as tungsten turns into a powdery state.

The present invention has been accomplished in view of the foregoing and other problems, and it is an object of the invention to provide a carbon material and a method of manufacturing the same that can form a layer of a metal that is highly reactive with carbon, such as tungsten, on a carbon substrate while at the same time inhibiting an increase in manufacturing cost and a degradation of processing accuracy.

### SOLUTION TO PROBLEM

In order to accomplish the foregoing object, the present invention provides a carbon material characterized by comprising a carbon substrate, a first layer, and a second layer, and wherein: the first layer contains a carbide of a transition metal (a first metal); the second layer contains a second metal and/or a carbide of the second metal and a carbide of the transition metal, the second metal being at least one metal selected from the group consisting of Group 4 metals, Group 5 metals, and Group 6 metals; and the first and second layers are formed on a surface of the carbon substrate in that order.
When the second layer, which contains the at least one metal selected from the group consisting of Group 4 metals, Group 5 metals, and Group 6 metals and/or the carbide of the metal, is directly formed on the surface of the carbon substrate (i.e., when the first layer is not formed), the metal carbide formed by the reaction between the just-mentioned metal and carbon may turn into a powdery state and peel off, because the metal is highly reactive with carbon. As a consequence, a good second layer cannot be formed. On the other hand, as in the foregoing configuration, the first layer, which contains a carbide of the transition metal is formed between the carbon substrate and the second layer, a good second layer can be formed on the carbon substrate because the first layer shows excellent adhesivity not only to the carbon substrate but also to the second layer. Moreover, the presence of the first layer serves to inhibit carburization into the second layer and violent reaction between carbon and the metal belonging to Group 4 metals, Group 5 metals, and Group 6 metals. As a result, the peeling of the second layer can be prevented.
It is also preferable that the second layer comprise a layer containing the carbide of the transition metal in a greater amount than that of the carbide of the second metal, and a layer containing the carbide of the second metal in a greater amount than that of the carbide of the transition metal. Furthermore, it is preferable that the second layer comprise a layer having, as determined by an EPMA measurement, a higher intensity of the carbide of the transition metal than that of the carbide of the second metal and a layer having a higher intensity of the carbide of the second metal than that of the carbide of the transition metal. When both the transition metal and the second metal are contained in the second layer, the adhesivity between the first layer and the second layer can be further improved.

In addition, it is preferable that the second layer have a thickness of 20 µm or less.
This enables the thickness of the second layer to a thickness corresponding to the size of the small holes (from about several microns to about several tens of microns) or the grooves formed in the carbon substrate, and therefore can inhibit the small holes or the like from being filled up. As a result, the processing accuracy is improved.
It should be noted that the second layer is defined to contain the second metal, which is the at least one metal selected from the group consisting of Group 4 metals, Group 5 metals, and Group 6 metals, and/or a carbide of the second metal and a carbide of the transition metal. This is because the second layer may either be carburized or not be carburized, depending the formation conditions (such as the film formation temperature or the like) of the second layer. Since this carburization takes place from the first layer side, a carbide of the metal is formed in the first layer side of the second layer because of the carburization, whereas in the surface side of the second layer, the carburization may not be caused and the second metal may be kept in a metal state.

It is desirable that the metal in the second layer be tungsten.
When tungsten is used as the metal, cracks, even if formed in the first layer, can be filled with tungsten or tungsten carbide, so that a material without cracks can be obtained. Moreover, since the thermal expansion coefficient is similar between carbon and tungsten or tungsten carbide, cracks do not form easily.

It is desirable that the transition metal in the first layer be chromium.
The reason is that chromium is excellent in adhesivity to the carbon substrate and also excellent in adhesion capability to tungsten.

It is desirable that the first layer have a thickness of from 1 µm to 10 µm.
If the thickness of the first layer is less than 1 µm, the effect of inhibiting carbon from migrating into the second layer (i.e., carburization inhibiting effect) is insufficient. On the other hand, if the thickness of the first layer exceeds 10 µm, the processing accuracy of the carbon material may be lowered.

It is preferable that the second layer have a thickness of 0.5 µm or greater, and more desirably, 1.0 µm or greater. On the other hand, it is desirable that the second layer have a thickness of 10 µm or less.
If the thickness of the second layer is less than 0.5 µm, the effect of forming the second layer may be insufficient. On the other hand, if the thickness of the second layer exceeds 10 µm, the processing accuracy of the carbon material may be lowered.

The present invention also provides a method of manufacturing a carbon material comprising: a first layer formation step of forming a first layer containing a carbide of a transition metal on a carbon substrate; and a second layer formation step of contacting and heating the carbon substrate on which the first layer has been formed, with a treatment agent containing at least one of second metals selected from the group consisting of Group 4 metals, Group 5 metals, and Group 6 metals, to form a second layer on a surface of the first layer, the second layer containing the at least one of second metals selected from the group consisting of Group 4 metals, Group 5 metals, and Group 6 metals, and/or a carbide of the second metal, and a carbide of the transition metal.
The second layer can be formed on the first layer by merely contacting and heating the carbon substrate with the treatment agent (powder, slurry or the like) containing the at least one of second metals selected from the group consisting of Group 4 metals, Group 5 metals, and Group 6 metals. This eliminates the need of special equipment when forming the second layer and can therefore reduce the manufacturing cost of the carbon material. In addition, with such a method, the second layer can be formed thin because the film thickness of the second layer can be adjusted by adjusting the heating time and the heating temperature. Furthermore, unlike thermal spraying, in which the film formation is effected by spraying particles, the film formation in this method is effected by diffusion reaction of metal. Therefore, the first layer and the second layer can be formed along the surface shape of the carbon substrate at any location of the carbon substrate.

In addition, the second layer is prevented from being carburized excessively even though heating is carried out in the second layer formation step because the first layer is formed before the formation of the second layer.
It should be noted that the second layer may be formed even when the treatment agent does not contain a pyrolytic hydrogen halide generating agent. However, in order to form a good second layer, it is desirable that the treatment agent contain a pyrolytic hydrogen halide generating agent.

It is desirable that the heating temperature in the second layer formation step be from 800°C to 1300°C.
If the temperature is less than 800°C, the formation of the second layer may take a long time. On the other hand, the temperature exceeding 1300°C may exceed the melting point of the metals belonging to Group 4 metals, Group 5 metals, and Group 6 metals, causing the metals to melt.

It is desirable that the heating temperature in the second layer formation step be from 800°C to 1000°C.
If the temperature exceeds 1000°C, the second layer may be turned into carbide excessively due to carburization.

It is desirable that the method further comprise a heat treatment step of performing a heat treatment after the first layer formation step.
By performing a heat treatment in this way, the first layer can be stabilized.

It is desirable that the first layer be formed by contacting and heating the carbon substrate with a treatment agent containing a transition metal.
Such a method makes it possible to form the first layer easily.

### ADVANTAGEOUS EFFECTS OF INVENTION

The present invention makes it possible to form a layer of a metal that is highly reactive with carbon, such as tungsten, on a carbon substrate while at the same time inhibiting an increase in manufacturing cost and a degradation of processing accuracy.

### BRIEF DESCRIPTION OF DRAWINGS

[Fig. 1] Fig. 1 is a view illustrating one example of a heating apparatus used for a method of manufacturing a carbon material according to the present invention.
[Fig. 2] Fig. 2 is a schematic view illustrating the state in which a first layer is formed on the surface of a carbon substrate.
[Fig. 3] Fig. 3 is a schematic view illustrating the state in which a second layer is formed on the first layer.
[Fig. 4] Fig. 4 is a photograph showing a cross section of a present invention material A1.
[Fig. 5] Fig. 5 is a SEM image of the present invention material A1.
[Fig. 6] Fig. 6 is an X-ray diffractogram of the present invention materials A1 and B.
[Fig. 7] Fig. 7 shows distributions of the elements in the present invention material A1 along the depth direction (the direction from the left to the right in the figure) as determined by EPMA.

### DESCRIPTION OF EMBODIMENTS

Hereinbelow, the present invention will be described in detail.
The carbon material of the present invention is characterized by comprising a carbon substrate, a first layer, and a second layer, and is characterized in that: the first layer contains a carbide of a transition metal; the second layer contains a second metal and/or a carbide of the second metal and a carbide of the transition metal, the second metal being at least one metal selected from the group of metals consisting of Group 4 elements, Group 5 elements, and Group 6 elements; and the first and second layers are formed on a surface of the carbon substrate in that order. The first layer can be fabricated by a method (CVR method) of heat-treating a carbon substrate embedded in a first mixture powder containing a pyrolytic hydrogen halide generating agent and metal particles containing a transition metal, together with a carbon member other than the carbon substrate. The second layer can be fabricated by a method (CVR method) of heat-treating a carbon substrate embedded in a second mixture powder containing a pyrolytic hydrogen halide generating agent and at least one second metal selected from the group consisting of Group 4 metals, Group 5 metals, and Group 6 metals. It is also possible that the first mixture powder and the second mixture powder may contain a mold release agent such as alumina or boron nitride, which is not involved in the reaction. Also, it is possible that the second mixture powder may not contain the pyrolytic hydrogen halide generating agent.

With the above-described method, it is possible to easily form the first layer, which contains a carbide of the transition metal, and the second layer, which contains at least one of second metals selected from the group consisting of Group 4 metals, Group 5 metals, and Group 6 metals and/or a carbide of the second metal and a carbide of the transition metal, on the surface of the carbon substrate. Moreover, with the above-described method, it is possible to ensure good adhesivity between the first layer and the second layer. When forming the second layer, the layer is formed by diffusion reaction of metal. Therefore, it is easy to form the second layer, which contains the carbide of the transition metal that forms the first layer and the carbide of the second metal. In addition, when the first layer and the second layer are formed by the CVR method, both of the layers can be formed thin in a shape following the carbon substrate.
It should be noted that the method of forming the first layer is not limited to the CVR method but may be thermal spraying or plating. However, in order to obtain the above-described advantage, it is desirable to use the CVR method.

### [The Step of Forming the First Layer]

In the above-described step of forming the first layer, the carbon substrate to be treated is heat-treated together with a carbon member other than the carbon substrate, a transition metal, and a pyrolytic hydrogen halide generating agent. Examples of the carbon member include a container made of carbon, such as a graphite crucible, and carbon powder. By heat-treating the carbon substrate to be treated together with the carbon member in this way, the first layer containing the carbide of the transition metal can be formed on the carbon substrate in a short time. The reason is believed to be since the use of the carbon member serves to utilize the materials such as the transition metal and the pyrolytic hydrogen halide generating agent efficiently for the surface treatment of the carbon substrate and therefore makes it possible to reduce the necessary heat amount.
As for the time for the heat treatment, the first layer can be formed sufficiently in as short as 15 minutes, and the first layer can be formed without color unevenness and substantially uniformly in about 1 hour.

It is preferable that the heat treatment in forming the first layer be performed at from 800°C to 1200°C. By treating within this temperature range, the carbon substrate can be treated efficiently. If the temperature is too low, it is possible that the formation of the first layer may be slow. If the temperature is too high, it is possible that the powder that has not reacted in the heat treatment may be thermally melted and bonded to the carbon substrate.

It is preferable that the heat treatment be performed under normal pressure. The reason is as follows. If the treatment can be performed under normal pressure, the equipment such as a vacuum pump is unnecessary, and the time required for reducing the pressure is also unnecessary. As a result, the treatment becomes simpler, and the treatment time becomes shorter. Moreover, since the above-described method does not require introduction of hydrogen gas, safety can be improved. It is, however, possible to introduce an inert gas such as nitrogen gas, if necessary.

### [The Step of Forming the Second Layer]

The second mixture powder containing a pyrolytic hydrogen halide generating agent and at least one metal selected from the group consisting of Group 4 metals, Group 5 metals, and Group 6 metals is placed in a container made of carbon such as a graphite crucible, similar to that used in the above-described step of forming the first layer. The carbon substrate is embedded in this second mixture powder, and a heat treatment is carried out. Thereby, the second layer can be formed. Forming the second layer using the CVR method is simple and easy, and also requires no special equipment. Therefore, the carbon material can be fabricated at low cost. Moreover, it is possible to form a very thin film that follows the shape of the carbon substrate. Therefore, the processing accuracy of the carbon material is improved.

It is preferable that the heat treatment in forming the second layer be performed at from 800°C to 1300°C (more preferably from 800°C to 1000°C). By treating within this temperature range, the carbon substrate can be treated efficiently. If the temperature is too low, it is possible that the formation of the second layer may be slow. If the temperature is too high, it is possible that the metal in the second layer may be melted. It is also preferable that the heat treatment be performed under normal pressure, as in the case of forming the first layer.

### [Other Embodiments]

(1) It is desirable that a stabilization process be carried out between the step of forming the first layer and the step of forming the second layer. By carrying out such a process, the first layer can be stabilized. Here, it is desirable that this process be carried out in a reducing gas atmosphere at from 500°C to 1200°C. It is also desirable that the process be carried out under a reduced pressure of from 1 Pa to 10000 Pa for 1 minute to 20 hours.
(2) The method of forming the first layer is not limited to the method described above, but may be a method using slurry such as described below.
First, chromium powder and an aqueous solution containing a binder agent are mixed to prepare a slurry. Thereafter, this slurry is coated on the surface of the carbon substrate, and then, the carbon substrate coated with the slurry is dried. Next, the carbon substrate coated with the slurry, and ammonium chloride are heat treated while they are placed in a graphite crucible, so that the first layer can be formed. Likewise, the second layer can also be fabricated by a method using slurry.

Next, the components and members used in the present invention will be described.
Examples of the carbon substrate include, but not particularly limited to, isotropic graphite materials, anisotropic graphite materials, and carbon fiber materials. It is preferable that the carbon substrate have a bulk density of from 1.4 g/cm³ to 2.1 g/cm³, an average pore radius of 10 µm or less, and a porosity of 40% or less.

The pyrolytic hydrogen halide generating agent is such that is kept in a solid state under room temperature and normal pressure but is decomposed by heating to generate a hydrogen halide such as hydrogen chloride, hydrogen fluoride, and hydrogen bromide. It is preferable that the heat decomposition temperature of the pyrolytic hydrogen halide generating agent be 200°C or higher, so that the handling before the heating can be easy. The hydrogen halide generated from the pyrolytic hydrogen halide generating agent reacts with the transition metal during the heat treatment and produces a metal halide gas. By treating the carbon substrate with the metal halide gas, the metal carbide layer can be formed on a surface of the carbon substrate. Since the treatment of the carbon substrate is conducted with gas as described above, the metal carbide layer can be formed substantially uniformly on the carbon substrate even when the carbon substrate has a complicated shape with, for example, holes and grooves.
It is preferable that the pyrolytic hydrogen halide generating agent be ammonium chloride from the viewpoint of availability.

It is sufficient that a transition metal is contained in the metal particles. Examples include a mixture powder of a transition metal and another metal, and an alloy powder of a transition metal and another metal. Examples of the transition metal include Ti, V, Cr, Mn, Fe, Co, Ni, Cu, Zn, Zr, Nb, Mo, and Ta, but the transition metal is not particularly limited as long as it reacts with the hydrogen halide and produces a metal halide gas. The produced metal halide gas reacts with the carbon on a surface of the carbon substrate and produces a metal carbide. It is preferable that Cr be contained in the transition metals from the viewpoint of its high reactivity. A preferable example of the metal particles is an alloy powder containing Cr, such as that of stainless steel.

Examples of the carbon member include a container made of carbon, such as a graphite crucible, and carbon powder.
With the use of the carbon member, the treatment time of the carbon substrate can be shortened, and the need of the hydrogen gas supply can be eliminated. As a result, the surface modification of the carbon substrate can be achieved in a simpler manner and more easily. This makes it possible to improve the adhesivity of the carbon substrate with a layer of a metal or the like that is to be later formed on the surface, and also to improve the strength of the resulting carbon material over the carbon substrate. Moreover, pressure reduction is not needed, and the heat treatment can be conducted under normal pressure (in an atmospheric pressure). Thus, the treatment can be conducted in a simple manner.

It is preferable that the carbon member be a graphite crucible. The use of a graphite crucible in the treatment makes it possible to suppress the flow of the gas around the embedded carbon substrate, and to form the metal carbide layer without color unevenness and more uniformly on the surface of the carbon substrate. Moreover, the gas produced from the powder can be kept in the graphite crucible to a certain degree, so the produced gas can be utilized effectively. It is preferable that a lid be placed on the graphite crucible, and the lid serves to further suppress the flow of the gas around the carbon substrate. Examples of the lid include one made of graphite, and a sheet made of graphite. In order to release the gas produced in the container, it is preferable that an air hole be provided in the container or in the lid. When using a sheet made of graphite, the air hole is not particularly necessary since the sheet merely covers the container.

When using carbon powder as the carbon member, it is recommended that the metal particles containing a transition metal, the pyrolytic hydrogen halide generating agent, and the carbon powder be filled in the container, the carbon substrate be embedded in the powder filled in the container, and the carbon substrate be heat-treated. When using carbon powder as the carbon member, the container is not particularly limited. In the treatment, it is possible to suppress the flow of the gas in the container by, for example, putting a lid or a sheet made of graphite on the container. It is also possible to use the above-mentioned graphite crucible as the container.

As described above, an introduced gas is not directly blown into the container in which the carbon substrate is embedded. Conversely, if an attempt is made to carry out the treatment while introducing a hydrogen gas, it is difficult to efficiently perform the treatment using the hydrogen gas because the container, such as the graphite crucible, hinders the introduction of hydrogen gas.

It is sufficient that the particle material of the second metal belonging to Group 4 metals, Group 5 metals, and Group 6 metals that is used for forming the second layer may contain a metal that belongs to Group 4 metals, Group 5 metals, and Group 6 metals. For example, it is possible to use mixture powder or alloy powder of a metal belonging to Group 4 metals, Group 5 metals, and Group 6 metals and another metal. Examples of the second metal include, but not particularly limited to, W, Mo, and Ta. Nevertheless, the advantages of the present invention can be exhibited most when using a metal that is highly reactive with carbon.
Examples of the pyrolytic hydrogen halide generating agent used for forming the second layer may include NH₄F, polyvinyl chloride, or the like, in addition to NH₄Cl.

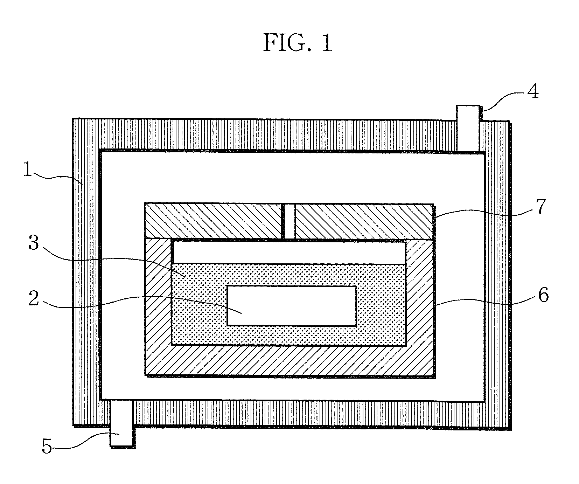

Next, one example of the apparatus used for forming the first layer, forming the second layer, and the stabilization process will be described with reference to Fig. 1.

### (1) When the apparatus is used for forming the first layer

The just-mentioned apparatus has a heating furnace 1 having a heater, and is configured to heat-treat a material to be treated, which is placed in the heating furnace 1. The heating furnace 1 is provided with a gas inlet port 4 and a gas exhaust port 5. The gas inlet port 4 is configured so that an inert gas such as nitrogen gas or argon gas can be introduced therefrom, while the gas exhaust port 5 is configured to naturally exhaust the inert gas therefrom.

In the present apparatus, a graphite crucible 6 may be disposed in the heating furnace 1. The graphite crucible 6 is configured so that the powder 3 (first mixture powder) can be filled in the graphite crucible 6, and a carbon substrate 2 to be treated can be embedded in the powder 3. The powder 3 contains a pyrolytic hydrogen halide generating agent and metal powder (metal particles) containing a transition metal. The graphite crucible 6 is configured to be closed by a lid 7, and the lid 7 has an air hole.

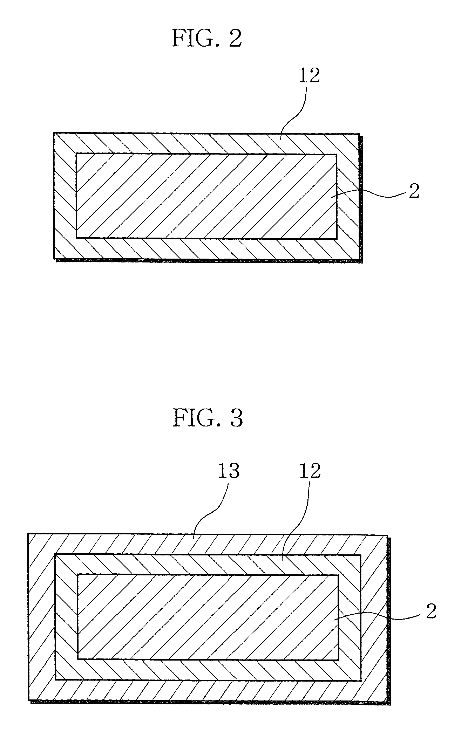

When the first layer is formed with the above-described apparatus of Fig. 1, the powder 3 is filled in the graphite crucible 6, then the carbon substrate 2 is embedded in the powder 3 filled in the crucible, and the apparatus is closed with the lid 7. Then, the graphite crucible 6 is placed in the apparatus and heated. Thus, as illustrated in Fig. 2, the first layer 12 can be is formed on the surface of a carbon substrate 2.

### (2) When the apparatus is used for the stabilization process

Only the points that are different from the above-described case where the apparatus is used for forming the first layer will be described below.
When conducting the stabilization process, the apparatus is configured as follows. A reducing gas such as H₂ gas can be introduced from the gas inlet port 4, while the gas exhaust port 5 is joined to a vacuum pump, which is not shown in the drawings, so that the pressure of the interior of the heating furnace 1 can be reduced. The carbon substrate is disposed on a support plate, which is not shown in the drawings. The support plate is disposed between the carbon substrate and the graphite crucible 6 and is made of carbon.

When the stabilization process is performed with the above-described apparatus of Fig. 1, the carbon substrate is placed directly in the apparatus, and thereafter the apparatus is evacuated using a vacuum pump until the internal pressure of the apparatus becomes from 1 to 10000 Pa. Next, while introducing a reducing gas such as a H₂ gas from the gas inlet port 4, the internal temperature of the apparatus is elevated to from 500°C to 1200°C. This condition is kept for 1 minute to 20 hours, whereby the stabilization process is implemented.

### (3) When the apparatus is used for forming the second layer

The only point that is different from the above-described case where the apparatus is used for forming the first layer is that the second mixture powder containing the pyrolytic hydrogen halide generating agent and the at least one metal selected from the group consisting of Group 4 metals, Group 5 metals, and Group 6 metals is used as the powder 3. Thereby, as illustrated in Fig. 3, the second layer 13 can be is formed on the first layer 12.

### EMBODIMENTS

Hereinbelow, the present invention will be described in further detail based on examples thereof. However, the present invention is not limited thereto.

### [First Embodiment]

### (Example 1)

Using an apparatus as shown in Fig. 1, a first mixture powder in which chromium powder, ammonium chloride powder (NH₄Cl), and alumina powder (Al₂O₃) are mixed at a weight ratio of 16 : 2.4 : 81.6 was filled in a graphite crucible (made by Toyo Tanso Co., Ltd, Model number IG-11), and a carbon substrate (high-density isotropic graphite formed by cold isotropic pressure forming: bulk density 1.8 g/cm³, average pore radius 5 µm, porosity 20%) was embedded in the first mixture powder filled in the crucible. The crucible was closed with a lid and placed in the heating furnace, and a heat treatment was performed. When heating, nitrogen was introduced from the gas inlet port, and the gas was discharged naturally from the gas exhaust port. Thereby, a first layer (thickness: about 1 µm) was formed on the surface of the carbon substrate. The temperature in the heat treatment was 800°C, and the treatment duration was 30 minutes.

Next, using the same apparatus, the carbon substrate produced in the above-described manner was placed directly in the apparatus, and thereafter, the apparatus was evaluated using a vacuum pump until the internal pressure of the apparatus became 150 Pa. Next, while introducing a H₂ gas from the gas inlet port 4, the internal temperature of the apparatus was elevated to 1200°C, and this condition was kept for 20 hours, whereby the stabilization process was implemented. Thereby, stabilization of Cr was effected, and the resulting first layer was formed of Cr₃C₂ and/or Cr₂C.

Next, in place of the above-described first powder, a second mixture powder in which tungsten powder, ammonium chloride powder (NH₄Cl), and alumina powder (Al₂O₃) were mixed at a weight ratio of 16 : 2.4 : 81.6 was filled in the graphite crucible, and the carbon substrate subjected to the above-described stabilization process was embedded in this second mixture powder filled in the crucible. The crucible was closed with the lid and placed in the heating furnace, and a heat treatment was performed. When heating, nitrogen was introduced from the gas inlet port, and the gas was discharged naturally from the gas exhaust port. Thereby, a second layer (thickness: about 1 µm) made of tungsten was formed. The temperature in the heat treatment was 800°C, and the treatment duration was 30 minutes.
The carbon material fabricated in this manner is hereinafter referred to as a present invention material A1.

### (Example 2)

A carbon material was fabricated in the same manner as described in Example 1 above, except that the stabilization process was not performed.
The carbon material fabricated in this manner is hereinafter referred to as a present invention material A2.

### (Comparative Example)

A carbon material was fabricated in the same manner as described in Example 1 above, except that the first layer was not formed and the stabilization process was not performed either.
The carbon material fabricated in this manner is hereinafter referred to as a comparative material Z.

### (Experiment)

The appearance of each of the present invention materials A1 and A2 as well as the comparative material Z was observed. The results are shown in Table 1 below.

**[TABLE 1]**

| Carbon material | Substrate | First layer | Stabilizatio n process | Results of experiment | | |
|---|---|---|---|---|---|---|
| | | | | Second layer formation | Appearance | Overall result |
| Present invention material A1 | Carbon | Present | Performed | Formed | No color unevenness observed | Excellent |
| Present invention material A2 | | | Not Performed | Formed | Color unevenness observed | Good |
| Comparativ e material Z | | Absent | Not performed | Not formed | Powder of WC formed | Poor |

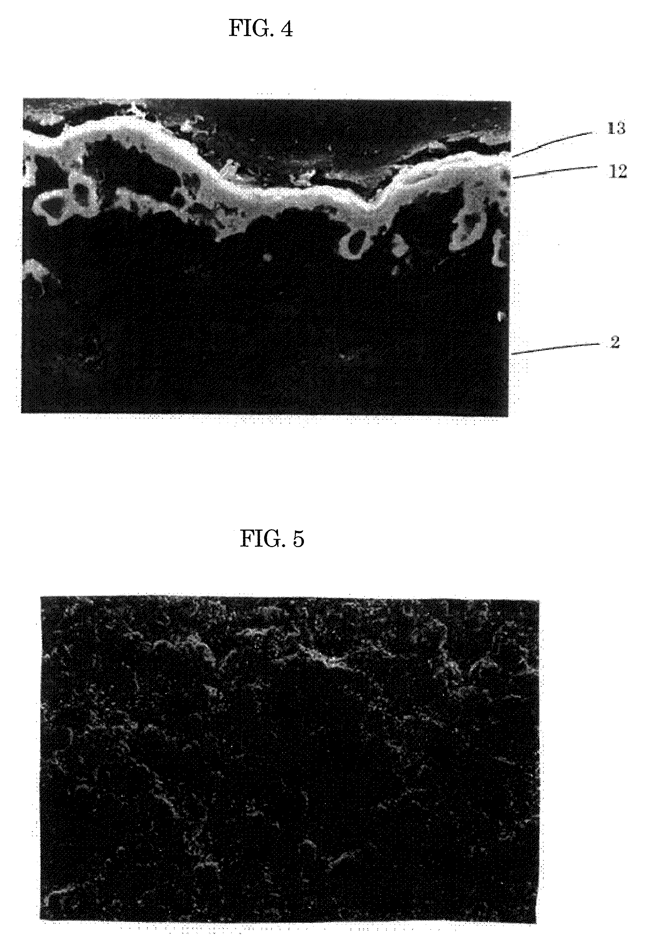

As is clear from Table 1, it was observed that a good second layer was not formed in the comparative material Z even though the material underwent the step for forming the second layer. When observing the appearance of the comparative material Z, it was found that WC (tungsten carbide) was not formed into a layer but was formed into brittle form, which was peeled and turned into a powder state. In contrast, it was observed that in the present invention material A1, a good second layer 13 was formed on the surface of the first layer 12, as illustrated in Fig. 4. Likewise, it was observed that in the present invention material A2, a good second layer without peeling was formed. However, it was observed that color unevenness was formed in the present invention material A2, for which the stabilization process was not performed, while color unevenness was not formed in the present invention material A1, for which the stabilization process was performed. This indicates that it is preferable to perform the stabilization process after forming the first layer.

### [Second Embodiment]

### (Example)

A carbon material was fabricated in the same manner as described in Example 2 of the First Embodiment, except that ammonium chloride powder was not added to the second powder (i.e., the second powder was made of tungsten powder and alumina powder) and that the heating temperature in forming the second layer was set at 1000°C.
The carbon material fabricated in this manner is hereinafter referred to as a present invention material B.

### (Experiment 1)

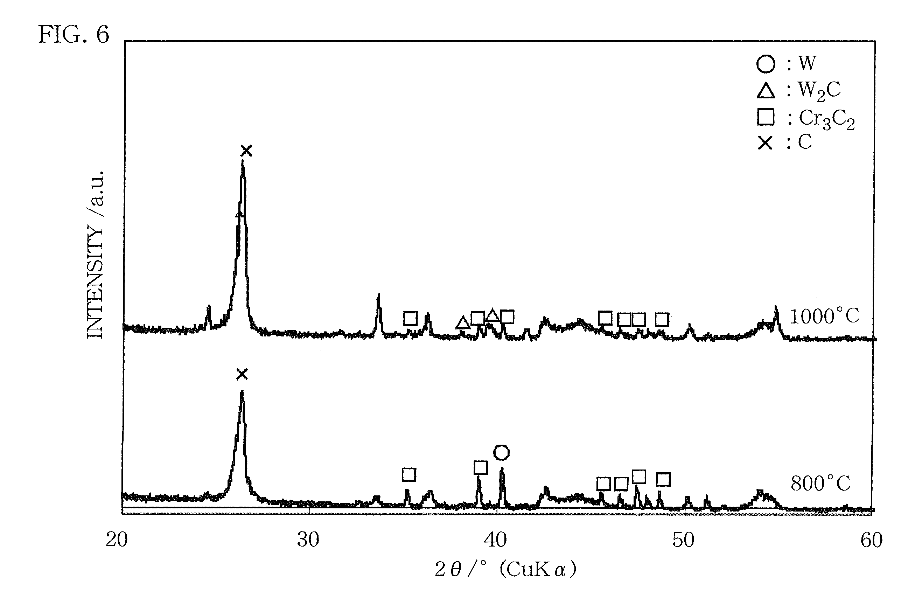

The appearance of each of the present invention material B as well as the present invention material A1, shown in Example 1 of the Frist Embodiment, was observed. The results are shown in Table 2 below. In addition, an X-ray diffraction analysis (CuKα) was performed for the present invention material A1 and B. The results are shown in Fig. 6.

**[TABLE 2]**

| Carbon material | Substrate | NH₄Cl | Results of experiment | | | |
|---|---|---|---|---|---|---|
| | | | Second layer formation | Color | Appearance | Overall result |
| Present invention material A1 | Substrate on which the first layer was formed | Added | Formed | Black | No crack observed | Excellent |
| Present invention material B | | Not added | Formed | | Cracks observed | Good |

As clearly seen from Table 2, it was observed that the second layer was formed not only in the present invention material A1 but also in the present invention material B. However, as illustrated in Fig. 5, it was observed that no crack was formed in the present invention material A1, while cracks were formed in the present invention material B. This indicates that it is preferable that the second powder contain ammonium chloride powder when forming the second layer.

In addition, as is clear from Fig. 6, the peak resulting from tungsten (W) was observed for the present invention material A1, in which the heating temperature in forming the second layer was set at 800°C, which indicates that a tungsten layer was formed. In contrast, the peak resulting from tungsten carbide (W₂C) was observed for the present invention material B, in which the heating temperature in forming the second layer was set at 1000°C, which indicates that a tungsten carbide layer was formed.

### (Experiment 2)

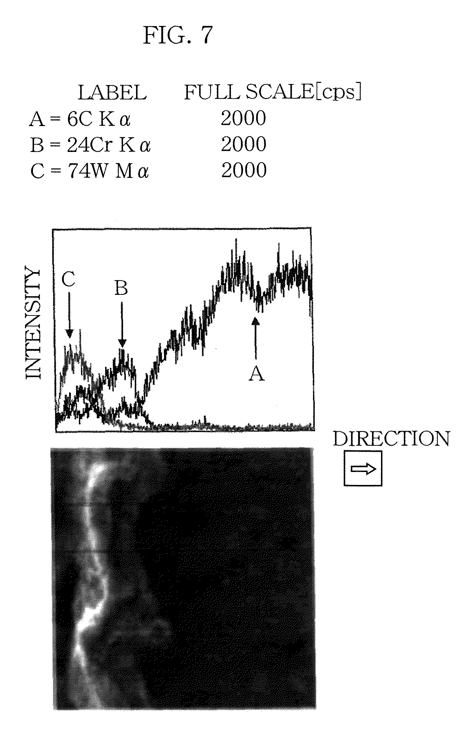

The distribution of elements in the present invention material A1 along the depth direction was determined using an EPMA. The results are shown in Fig. 7. The analysis was conducted in the range indicated by the lines shown in the lower view of Fig. 7.
Fig. 7 clearly shows that there is a layer that contains chromium and carbon but does not contain tungsten (i.e., the first layer) in a region deeper from the surface, and there is a layer that contains chromium, tungsten, and carbon (i.e., the second layer) thereabove. That is, it is clear that tungsten diffuses to form layers and the second layer comprises a layer containing chromium in a greater amount and a layer containing tungsten in a greater amount.

### INDUSTRIAL APPLICABILITY

The present invention makes it possible to modify the surface of a carbon material by a simple and easy process.

**REFERENCE SIGNS LIST**

| | |
|---|---|
| 1 | Furnace |
| 2 | Carbon substrate |
| 3 | Powder |
| 4 | Gas inlet port |
| 5 | Gas exhaust port |
| 6 | Graphite crucible |
| 7 | Lid |

## Claims

1. A carbon material **characterized by** comprising: a carbon substrate, a first layer, and a second layer, and **characterized in that**: the first layer contains a carbide of a transition metal; the second layer contains a second metal and/or a carbide of the second metal and a carbide of the transition metal, the second metal being at least one metal selected from the group consisting of Group 4 metals, Group 5 metals, and Group 6 metals; and the first and second layers are formed on a surface of the carbon substrate **in that** order.

2. The carbon material according to claim 1, wherein the second layer comprises a layer containing the carbide of the transition metal in a greater amount than that of the carbide of the second metal, and a layer containing the carbide of the second metal in a greater amount than that of the carbide of the transition metal.

3. The carbon material according to claim 1 or 2, wherein the second layer comprises a layer having, as determined by an EPMA measurement, a higher intensity of the carbide of the transition metal than that of the carbide of the second metal and a layer having a higher intensity of the carbide of the second metal than that of the carbide of the transition metal.

4. The carbon material according to any one of claims 1 through 3, wherein the second layer has a thickness of 20 µm or less.

5. The carbon material according to any one of claims 1 through 4, wherein the second metal is tungsten.

6. The carbon material according to any one of claims 1 through 5, wherein the transition metal is chromium.

7. The carbon material according to any one of claims 1 through 6, wherein the first layer has a thickness of from 1 µm to 10 µm.

8. The carbon material according to any one of claims 1 through 7, wherein the second layer has a thickness of 0.5 µm or greater.

9. A method of manufacturing a carbon material, **characterized by** comprising:
a first layer formation step of forming a first layer containing a carbide of a transition metal on a carbon substrate; and
a second layer formation step of contacting and heating the carbon substrate on which the first layer has been formed, with a treatment agent containing at least one metal selected from the group of metals consisting of Group 4 elements, Group 5 elements, and Group 6 elements, to form a second layer on a surface of the first layer, the second layer containing the at least one metal selected from the group of metals consisting of Group 4 elements, Group 5 elements, and Group 6 elements and/or a carbide of the at least one metal.

10. The method of manufacturing a carbon material according to claim 9, wherein the heating temperature in the second layer formation step is from 800°C to 1300°C.

11. The method of manufacturing a carbon material according to claim 10, wherein the heating temperature in the second layer formation step is from 800°C to 1,000°C .

12. The method of manufacturing a carbon material according to any one of claims 9 through 11, further comprising a heat treatment step of performing a heat treatment after the first layer formation step.

13. The method of manufacturing a carbon material according to any one of claims 9 through 12, wherein the at least one metal is tungsten.

14. The method of manufacturing a carbon material according to any one of claims 9 through 13, wherein the first layer is formed by contacting and heating the carbon substrate with a treatment agent containing a transition metal.
